# NEUE EUROPÄISCHE PATENTSCHRIFT

(11) **EP 1 799 736 B2**
(45) Veröffentlichungstag und Bekanntmachung des Hinweises auf die Entscheidung über den Einspruch: **17.11.2021**
(45) Hinweis auf die Patenterteilung: 25.03.2015
(21) Anmeldenummer: 05798205.0
(22) Anmeldetag: 28.09.2005
(51) Int. Cl.: C08G 18/48, C08G 18/76, C08J 9/04

(54) **VERFAHREN ZUR HERSTELLUNG VON POLYURETHAN-HARTSCHAUMSTOFFEN**
METHOD FOR PRODUCING RIGID POLYURETHANE FOAMS
PROCEDE DE PRODUCTION DE MOUSSES DE POLYURETHANNE RIGIDES

(30) Priorität: 05.10.2004 DE 102004048728
(43) Veröffentlichungstag der Anmeldung: 27.06.2007
(73) Patentinhaber: BASF SE, 67056 Ludwigshafen am Rhein (DE)
(72) Erfinder: EMGE, Andreas, 49448 Lemförde (DE); SEIFERT, Holger, 49163 Bohmte (DE); DINSCH, Stefan, 01993 Schipkau (DE); KLASSEN, Johann, 32351 Stemwede-Oppendorf (DE); STELLING, Christian, 49205 Gaste (DE)
(74) Vertreter: BASF IP Association
(86) Internationale Anmeldenummer: PCT/EP2005/010491
(87) Internationale Veröffentlichungsnummer: WO 2006/037540

(56) Entgegenhaltungen:
- EP-A- 0 824 123
- EP-A- 0 832 909
- EP-A- 1 138 709
- WO-A-00/05289
- WO-A-03/027161

## Beschreibung

Gegenstand der Erfindung ist ein Verfahren zur Herstellung von Polyurethan-Hartschaumstoffen durch Umsetzung von Polyisocyanaten mit Verbindungen mit mindestens zwei mit Isocyanatgruppen reaktiven Wasserstoffatomen.

Polyurethan-Hartschaumstoffe sind seit langem bekannt und werden vorwiegend zur Wärme- und Kälteisolation, z. B. in Kühlgeräten, in Warmwasserspeichern, in Fernwärmerohren oder im Bauwesen, beispielsweise in Sandwichelementen, eingesetzt. Eine zusammenfassende Übersicht über die Herstellung und Anwendung Polyurethan-Hartschaumstoffen findet sich beispielsweise im Kunststoff-Handbuch, Band 7, Polyurethane 1. Auflage 1966, herausgegeben von Dr. R. Vieweg und Dr. A. Höchtlen, 2. Auflage 1983, herausgegeben von Dr. Günter Oertel, und 3. Auflage 1993, herausgegeben von Dr. Günter Oertel, Carl Hanser Verlag, München, Wien.

Ihre Herstellung erfolgt zumeist durch Umsetzung von Polyisocyanaten mit Verbindungen mit mindestens zwei mit Isocyanatgruppen reaktiven Wasserstoffatomen in Anwesenheit von Katalysatoren, Treibmitteln sowie Hilfs- und/oder Zusatzstoffen.

Eine wesentliche Anforderung an die Hartschaumstoffe ist die Verkürzung der Entformzeit, ohne dass es zu Einschränkungen in den mechanischen oder den Verarbeitungseigenschaften kommt. Weiterhin sollten die Ausgangsprodukte für die Herstellung der Hartschaumstoffe eine gute Löslichkeit für das Treibmittel, insbesondere bei Einsatz von Kohlenwasserstoffen als Treibmittel, aufweisen, um Schaumstoffe mit einer möglichst geringen Dichten zu erzielen. In der Praxis werden die unterschiedlichen Eigenschaften der Schaumstoffe zumeist durch den Einsatz von unterschiedlichen Polyolen eingestellt.

Es ist bekannt, dass Polyole mit sehr hoher Funktionalität eine sehr hohe Viskosität aufweisen, so dass sie nicht in Formulierungen verwendet werden können, die in den üblichen Produktionsanlagen noch verarbeitbar sind.

Weiterhin ist bekannt, dass die Löslichkeit von Kohlenwasserstoffen bei Verwendung von Polyetheralkoholen, die mit Aminen, insbesondere mit aromatischen Aminen und bevorzugt mit vicinalem Toluylendiamin (TDA) gestartet sind, eine besonders gute Löslichkeit von Kohlenwasserstoff enthaltenden Treibmitteln zeigen. Unter vicinalem TDA versteht man die ortho-Isomeren des TDA.

Aus EP 1 138 709 ist bekannt, dass Hartschaumstoffe mit einer guten Fließfähigkeit hergestellt werden können, wenn die Verbindungen mit mindestens zwei mit Isocyanatgruppen reaktiven Wasserstoffatomen mindestens einen Polyetheralkohol mit einer Hydroxylzahl von 100 bis 250 mg KOH/g enthalten, der durch Anlagerung von Alkylenoxiden an H-funktionelle Startsubstanzen mit 2 bis 4 aktiven Wasserstoffatomen, insbesondere Glykole, Trimethylolpropan, Glyzerin, Pentaerythrit, oder TDA hergestellt wurde.

Diese Systeme können jedoch noch nicht allen Anforderungen der Technik gerecht werden.

Aufgabe der Erfindung war es, ein Verfahren zur Herstellung von Polyurethan-Hartschaumstoffen bereitzustellen, die eine kurze Entformzeit, eine nicht zu hohe Viskosität der Polyolkomponente, die eine Verarbeitung in der Produktion nach dem Stand der Technik erlaubt und eine hohe Löslichkeit der Treibmittel zur Einstellung niedriger Rohdichten im Bauteil aufweisen.

Die Aufgabe konnte überraschenderweise gelöst werden durch die Verwendung einer Mischung aus einem mit TDA gestarteten Polyetheralkohol mit einer Hydroxylzahl von 360 bis 450 mg KOH/g, einem mit Saccharose und/oder Sorbit gestarteten Polyetheralkohol mit einer Hydroxylzahl von 380 bis 480 mg KOH/g und einem mit 3- oder 4-funktionellen Alkoholen, 1- oder 2-funktionellen Aminen oder Aminoalkoholen oder Rizinusöl gestarteten Polyetheralkohol mit einer Hydroxylzahl von 140 bis 250 mg KOH/g, wobei als Polyisocyanat eine Mischung aus einer Komponente a1) mit einem NCO-Gehalt von 30 bis 32 Gew.-% und einer Viskosität von 2000 bis 2200 mPa·s bei 25°C und einer Komponente a2) mit einem NCO-Gehalt von 30 bis 32 Gew.-% und einer Viskosität von 100 bis 120 mPa·s bei 25°C eingesetzt wird.

Gegenstand der Erfindung ist demzufolge ein Verfahren zur Herstellung von Polyurethan-Hartschaumstoffen durch Umsetzung von
a) Polyisocyanaten mit
b) Verbindungen mit mindestens zwei mit Isocyanatgruppen reaktiven Wasserstoffatomen in Anwesenheit von
c) Treibmitteln,
dadurch gegenzeichnet, dass als Verbindungen mit mindestens zwei mit Isocyanatgruppen reaktiven Wasserstoffatomen b) ein Gemisch aus
b1) einem Polyetheralkohol mit einer Hydroxylzahl von 360 bis 450 mg KOH/g und einer Viskosität von größer 12000 mPa·s bei 25°C, herstellbar durch Anlagerung von Ethylenoxid und/und Propylenoxid an TDA,
b2) einem Polyetheralkohol mit einer Funktionalität von 5 bis 7,5 und einer Hydroxylzahl von 380 bis 480 mg KOH/g, herstellbar durch Anlagerung von Propylenoxid an Sorbit und/oder Saccharose, vorzugsweise Saccharose,
b3) einem Polyetheralkohol mit einer Funktionalität von 2 bis 4 und einer Hydroxylzahl von 120 bis 250 mg KOH/g, herstellbar durch Anlagerung von Ethylenoxid und Propylenoxid an TDA, von TDA verschiedene Amine oder von Propylenoxid an 2-, 3- oder 4-funktionelle Alkohole, oder Ricinusölderivate
eingesetzt wird, und
wobei als Polyisocyanat eine Mischung aus einer Komponente a1) mit einem NCO-Gehalt von 30 bis 32 Gew.-% und einer Viskosität von 2000 bis 2200 mPa·s bei 25°C und einer Komponente a2) mit einem NCO-Gehalt von 30 bis 32 Gew.-% und einer Viskosität von 100 bis 120 mPa·s bei 25°C eingesetzt wird.

Vorzugsweise werden die Polyole b1) in einer Menge von 10 bis 50 Gew.-%, die Polyole b2) in einer Menge von 25 bis 80 Gew.-% und die Polyole b3) in einer Menge von 10 bis 25 Gew.-%, jeweils bezogen auf die Summe der Polyole b1), b2) und b3) eingesetzt.

Das Polyol b1) wird durch Anlagerung von Ethylenoxid und/oder Propylenoxid an TDA hergestellt. Prinzipiell können alle TDA-Isomere eingesetzt werden. Vorzugsweise wird TDA mit einem Gehalt von mindestens 70 Gew.-%, besonders bevorzugt mindestens 80 Gew.-% und insbesondere mindestens 85 Gew.-% vicinalem TDA eingesetzt. Derartige Gemische fallen bei der Aufarbeitung von TDA bei der TDI-Herstellung an. Polyetheralkohole aus TDA mit dem beschriebenen Gehalt an vicinalem TDA zeichnen sich durch eine verbesserte Löslichkeit für Treibmittel, insbesondere Kohlenwasserstoffe, wie Pentan, aus.

Wie beschrieben, können die Polyole b1) sowohl durch Anlagerung von ausschließlich Propylenoxid als auch durch Anlagerung von ausschließlich Ethylenoxid an TDA hergestellt werden. Vorzugsweise enthalten die Polyole b1) maximal 25 Gew.-%, bezogen auf das Gewicht des Polyetheralkohols, Ethylenoxid.

Bei der Herstellung der Polyetheralkohole b1) wird vorzugsweise zunächst an die Startsubstanz Ethylenoxid angelagert, vorzugsweise in einer Menge von 5 bis 25 Gew.-%, bezogen auf das Gewicht des Polyetheralkohols. Die Anlagerung des Ethylenoxids kann vorzugsweise auch ohne Zusatz eines Katalysators erfolgen. Nach der Anlagerung des Ethylenoxids wird das Propylenoxid, gegebenenfalls im Gemisch mit weiterem Ethylenoxid, angelagert, vorzugsweise unter Verwendung eines basischen Katalysators, insbesondere Kaliumhydroxid. Nach Beendigung der Anlagerung wird der Polyetheralkohol durch Abtrennung von leichtflüchtigen Nebenprodukten, Neutralisation des basischen Katalysators und Abtrennung der entstandenen Salze aufgearbeitet.

Die Polyole b1) haben, wie beschrieben, eine Funktionalität von maximal 4, eine Hydroxylzahl von 360 bis 450 mg KOH/g und eine Viskosität von 12000 bis 75000 mPa·s bei 25°C, bestimmt mit einem Rotationsviskosimeter Rheotec RC 20 unter Verwendung der Spindel CC 25 DIN (Spindel-Durchmesser: 12.5 mm; Messzylinder-Innendurchmesser: 13.56 mm) bei einer Scherrate von 50 1/s.

Das Polyol b2) wird durch Anlagerung von Propylenoxid an Saccharose und/oder Sorbit hergestellt. Üblicherweise erfolgt die Anlagerung des Propylenoxids an die Saccharose bzw. an Sorbit in Anwesenheit von flüssigen Coinitiatoren. Als Coinitiatoren kommen beispielsweise Wasser und/oder bei Reaktionstemperatur flüssige Alkohole, vorzugsweise Glyzerin, Ethylenglykol, Diethylenglykol, Propylenglykol oder Dipropylenglykol zum Einsatz. Wenn die Funktionalität der Polyole besonders hoch liegen soll, wird bevorzugt Glyzerin als Coinitiator eingesetzt. Vorzugsweise haben die Polyole b2) einen Gehalt an freier Saccharose von kleiner 0,05 Gew.-% und einen Gehalt an Glykolen, die nicht als Coinitiatoren eingesetzt waren, von kleiner 3 Gew.-%, jeweils bezogen auf das Gewicht des Polyetheralkohols b1). Insbesondere ist es vorteilhaft, wenn der Gehalt an freier Saccharose im Gemisch aus b1), b2) und b3) unter 0,03 Gew.-%, bezogen auf das Gemisch aus b1), b2) und b3) liegt.

Die Anlagerung des Propylenoxids erfolgt üblicherweise in Anwesenheit von Katalysatoren, vorzugsweise basischen Katalysatoren und insbesondere Kaliumhydroxid.

Nach der Anlagerung des Alkylenoxids erfolgt die Aufarbeitung wie bei Polyol b1) beschrieben.

Die Polyole b2) haben vorzugsweise eine Viskosität von 15000 bis 80000 mPa·s, bestimmt bei 25°C mit einem Rotationsviskosimeter Rheotec RC 20 unter Verwendung der Spindel CC 25 DIN (Spindel-Durchmesser: 12.5 mm; Messzylinder-Innendurchmesser: 13.56 mm) bei einer Scherrate von 50 1/s.

Ähnlich aufgebaute Polyetheralkohole mit einer höheren Hydroxylzahl und einer höheren Funktionalität als b2) weisen eine zu hohe Viskosität auf und ergeben außerdem eine mäßige Entformbarkeit, ähnlich aufgebaute Polyetheralkohole mit niedrigerer Hydroxylzahl und einer höheren Funktionalität haben zwar eine niedrige Viskosität, weisen aber ebenfalls eine schlechte Entformbarkeit auf.

Die Polyole b3) werden durch Anlagerung von Propylenoxid an niedermolekulare Alkohole, insbesondere solchen mit einem Molekulargewicht von unter 400, oder Amine hergestellt. Beispiele für niedermolekulare Alkohole sind Glykole, wie Ethylenglykol, Propylenglykol und deren höhere Homologen, Glyzerin, Trimethylolpropan und Pentaerythrit. Beispiele für Amine sind TDA; wobei das TDA vorzugsweise den unter Polyol b1) beschriebenen Gehalt an vicinalem TDA aufweist, Ethylendiamin bzw. gegebenenfalls mono- und dialkylsubstituiertes Ethylendiamin, Ammoniak, Anilin, und Triethanolamin bzw. überwiegend Triethanolamin enthaltende Stoffgemische bzw. gegebenenfalls mono-, di- und trialkylsubstituiertes Triethanolamin. Bei der Herstellung der Polyole b3), die mit TDA gestartet sind, kann es vorteilhaft sein, wie bei den Polyolen b1) beschrieben zunächst unkatalysiert Ethylenoxid und danach unter Verwendung eines basischen Katalysators Propylenoxid in den bei b1) beschriebenen Mengen anzulagern.

Die Polyole b3) haben vorzugsweise eine Viskosität von kleiner 1000 mPa·s, bestimmt bei 25°C mit einem Rotationsviskosimeter Rheotec RC 20 unter Verwendung der Spindel CC 25 DIN (Spindel-Durchmesser: 12.5 mm; Messzylinder-Innendurchmesser: 13.56 mm) bei einer Scherrate von 50 1/s.

Zu den übrigen für das erfindungsgemäße Verfahren eingesetzten Ausgangsstoffen ist folgendes zu sagen.

Erfindungsgemäß wird als Polyisocyanat eine Mischung aus einer Komponente a1) mit einem NCO-Gehalt von 30 bis 32 Gew.-% und einer Viskosität von 2000 bis 2200 mPas•s bei 25°C und einer Komponente a2) mit einem NCO-Gehalt von 30 bis 32 Gew.-% und einer Viskosität von 100 bis 120 mPas•s bei 25°C eingesetzt.

Zur Herstellung von Polyurethan-Hartschaumstoffen wird insbesondere Roh-MDI eingesetzt. Vorzugsweise haben diese Verbindungen, einen Anteil an 2-Kern MDI von etwa 40 Gew.-%, einen Anteil an 3-Kern MDI von etwa 26 Gew.-% und einen Anteil an 4-Kern MDI von etwa 8 Gew.-%. Der Rest sind höhere Homologe.

In einer weiteren bevorzugten Ausführungsform des erfindungsgemäßen Verfahrens wird eine Mischung aus einem Roh-MDI a1) und einem Roh-MDI a2) eingesetzt.

Die Komponente a1) hat einen NCO-Gehalt von 30 bis 32 Gew.-% und eine Viskosität von etwa 2000 mPa·s, insbesondere zwischen 2000 und 2200 mPa·s bei 25°C. Die Komponente a1) hat vorzugsweise einen Anteil an 2-Kern MDI von 22 bis 28 Gew.-%, einen Anteil an 3-Kern MDI von 26 bis 34 Gew.-% und einen Anteil an 4-Kern MDI von 5 bis 11 Gew.-%, jeweils bezogen auf das Gewicht der Komponente a1). Der Rest sind höhere Homologe.

Die Komponente a2) hat einen NCO-Gehalt von 30 bis 32 Gew.-% und eine Viskosität von etwa 100 mPa·s, vorzugsweise von 100 bis 120 mPa·s bei 25°C. Die Komponente a2) hat vorzugsweise einen Anteil an 2-Kern MDI von 43 bis 53 Gew.-%, einen Anteil an 3-Kern MDI von 20 bis 26 Gew.-% und einen Anteil an 4-Kern MDI von etwa 5 bis 9 Gew.-%, jeweils bezogen auf das Gewicht der Komponente a2). Der Rest sind höhere Homologe.

Die Mischung aus a1) und a2) hat vorzugsweise einen Anteil an 2-Kern MDI von 25 bis 38 Gew.-% und eine Viskosität von 250 bis 1000 mPa·s bei 25°C.

Die Viskosität der Polyisocyanate a1) und a2) sowie der Mischung aus a1) und a2) wird ebenfalls bestimmt bei 25°C mit einem Rotationsviskosimeter Rheotec RC 20 unter Verwendung der Spindel CC 25 DIN (Spindel-Durchmesser: 12.5 mm; Messzylinder-Innendurchmesser: 13.56 mm) bei einer Scherrate von 50 1/s.

Für verschiedene Anwendungen ist es vorteilhaft, Isocyanuratgruppen in das Polyisocyanat einzubauen.

Hierfür werden bevorzugt Isocyanuratgruppen bildende Katalysatoren, beispielsweise Alkalimetallsalze, wie Kaliumoctoat und/oder Kaliumacetat alleine oder in Kombination mit tertiären.Aminen eingesetzt. Die Isocyanuratat-Bildung führt zu flammwidrigen Schaumstoffen, welche bevorzugt im technischen Hartschaum, beispielsweise im Bauwesen als Dämmplatte oder Sandwichelemente, eingesetzt werden. Die Isocyanuratbildung kann bei Temperaturen über 60°C verstärkt ablaufen.

Die Mischung der Polyole b1), b2) und b3) wird vorzugsweise als alleinige Komponente b) eingesetzt. Es kann jedoch vorteilhaft sein, in Kombination mit den genannten Polyolen weitere Verbindungen mit mindestens zwei gegenüber Isocyanat reaktiven Wasserstoffatomen einzusetzen. In diesem Fall wird die Mischung der Komponenten b1), b2) und b3) in einer Menge von mindestens 70 Gew.-%, bezogen auf das Gewicht der Komponente b), eingesetzt.

Als Verbindungen mit mindestens zwei gegenüber Isocyanat reaktiven Wasserstoffatomen b), die gemeinsam mit den oben näher beschriebenen Polyolen b1), b2) und b3) eingesetzt werden können, kommen insbesondere solche in Frage, die zwei oder mehrere reaktive Gruppen, ausgewählt aus OH-Gruppen, SH-Gruppen, NH-Gruppen, NH₂-Gruppen und CH-aciden Gruppen, wie z.B. β-Diketo-Gruppen, im Molekül tragen. Bevorzugt werden Polyesteralkohole und/oder Polyetheralkohole eingesetzt.

Die gemeinsam mit den erfindungsgemäß eingesetzten Polyetheralkoholen b1), b2) und b3) eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und isomeren Naphthalindicarbonsäuren hergestellt.

Die gemeinsam mit den erfindungsgemäß eingesetzten Polyetheralkoholen b1), b2) und b3) verwendeten Polyetheralkohole haben zumeist eine Funktionalität zwischen 2 und 8, insbesondere 4 bis 8.

Insbesondere als Polyhydroxylverbindungen verwendet werden Polyetherpolyole, die nach bekannten Verfahren, beispielsweise durch anionische Polymerisation von Alkylenoxiden in Gegenwart von Alkalihydroxiden, hergestellt werden.

Als Alkylenoxide werden vorzugsweise Ethylenoxid und 1,2-Propylenoxid eingesetzt. Die Alkylenoxide können einzeln, alternierend nacheinander oder als Mischungen verwendet werden.

Als Startermoleküle kommen beispielsweise in Betracht: Wasser, organische Dicarbonsäuren, wie z.B. Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Anilin, Phenylendiamine, 2,3-, 2,4-, 3,4- und 2,6-Toluylendiamin und 4,4'-, 2,4'- und 2,2'-Diamino-diphenylmethan.

Als Startermoleküle kommen ferner in Betracht: Alkanolamine, wie Ethanolamin, N-Methyl- und N-Ethylethanolamin, Dialkanolamine, wie. Diethanolamin, N-Methyl- und N-Ethyldiethanolamin und Trialkanolamine wie Triethanolamin und Ammoniak.

Weiterhin eingesetzt werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Pentaerythrit, Sorbit und Saccharose, mehrwertige Phenole, wie 4,4'-Dihydroxy-diphenylmethan und 4,4'-Dihydroxy-diphenylpropan-2,2, Resole, wie oligomere Kondensationsprodukte aus Phenol und Formaldehyd und Mannich-Kondensate aus Phenolen, Formaldehyd und Dialkanolaminen sowie Melamin.

Die Polyetherpolyole besitzen eine Funktionalität von vorzugsweise 3 bis 8 und insbesondere 3 und 6 und Hydroxylzahlen von vorzugsweise 120 mg KOH/g bis 770 mg KOH/g und insbesondere 240 mg KOH/g bis 570 mg KOH/g, wobei sich die jeweiligen Werte von denen der Polyole b1), b2) und b3) unterscheiden.

Weitere Angaben zu den verwendeten Polyetheralkoholen und Polyesteralkoholen sowie ihrer Herstellung finden sich beispielsweise im Kunststoffhandbuch, Band 7 "Polyurethane", herausgegeben von Günter Oertel, Carl-Hanser-Verlag München, 1993.

Zu den Verbindungen mit mindestens zwei mit Isocyanatgruppen reaktiven Wasserstoffatomen gehören auch die gegebenenfalls mitverwendeten Kettenverlängerer und Vernetzer. Zur Modifizierung der mechanischen Eigenschaften kann sich jedoch der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Sofern zur Herstellung der Polyurethan-Hartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise 2 bis 5 Gew.-%, bezogen auf das Gewicht der Verbindungen mit mindestens zwei mit Isocyanatgruppen reaktiven Wasserstoffatomen b), zum Einsatz.

Das erfindungsgemäße Verfahren wird üblicherweise in Anwesenheit von Treibmitteln, Katalysatoren sowie, falls erforderlich, Hilfs- und/oder Zusatzstoffen durchgeführt.

Als Treibmittel c) kann beispielsweise Wasser verwendet werden, das mit Isocyanatgruppen unter Abspaltung von Kohlendioxid reagiert. An Stelle von, vorzugsweise jedoch in Kombination mit Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 110°C, insbesondere unter 80°C. Zu den physikalischen Treibmitteln zählen auch inerte Gase, die in den in die Einsatzkomponenten eingebracht bzw. in ihnen gelöst werden, beispielsweise Kohlendioxid, Stickstoff oder Edelgase.

Die bei Raumtemperatur flüssigen Verbindungen werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt Propan, n-Butan, iso- und Cyclobutan, n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und 1,1,1,2,3,3,3-Heptafluorpropan, sowie Perfluoralkane, wie: C₃F₈, C₄F₁₀, C₅F₁₂, C₆F₁₄, und C₇F₁₇. Die genannten physikalischen Treibmittel können allein oder in beliebigen Kombinationen untereinander eingesetzt werden. Bevorzugt werden als physikalische Treibmittel Pentan-Isomere, insbesondere Cyclopentan, eingesetzt

Als Katalysatoren werden insbesondere Verbindungen eingesetzt, welche die Reaktion der Isocyanatgruppen mit den mit Isocyanatgruppen reaktiven Gruppen stark beschleunigen. Insbesondere eingesetzt werden organische Metallverbindungen, vorzugsweise organische Zinnverbindungen, wie Zinn(II)-salze von organischen Säuren.

Weiterhin können als Katalysatoren stark basische Amine eingesetzt werden. Beispiele hierfür sind sekundäre aliphatische Amine, Imidazole, Amidine, Triazine sowie Alkanolamine.

Die Katalysatoren können, je nach Erfordernis, allein oder in beliebigen Mischungen untereinander eingesetzt werden.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Flammschutzmittel, Hydrolyseschutzmittel, Antistatika, fungistatisch und bakteriostatisch wirkende Mittel zum Einsatz.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl-Hanser-Verlag München, 1. Auflage, 1966, 2. Auflage, 1983 und 3. Auflage, 1993.

Zur Herstellung der Polyurethan-Hartschaumstoffe werden die Polyisocyanate a), und die Verbindungen mit mindestens zwei mit Isocyanatgruppen reaktiven Wasserstoffatomen b) in solchen Mengen zur Umsetzung gebracht, dass das Äquivalenz-Verhältnis von NCO-Gruppen der Polyisocyanate a) zur Summe der reaktiven Wasserstoffatome der Komponenten b) 0,85 bis 1,75:1, vorzugsweise 1,0 bis 1,3:1 und insbesondere ungefähr 1,0 bis 1,2:1, beträgt. Sofern die Urethangruppen enthaltenden Schaumstoffe durch die Bildung von Isocyanuratgruppen modifiziert werden, beispielsweise zur Erhöhung der Flammwidrigkeit, wird üblicherweise ein Verhältnis von NCO-Gruppen der Polyisocyanate a) zur Summe der reaktiven Wasserstoffatome der Komponente b) von 1,6 bis 60:1, vorzugsweise 3,0 bis 8:1 angewandt.

Die Hartschaumstoffe auf Isocyanatbasis können diskontinuierlich oder kontinuierlich nach dem Prepolymer- oder vorzugsweise nach dem one shot-Verfahren mit Hilfe bekannter Mischvorrichtungen hergestellt werden.

Als besonders vorteilhaft hat es sich erwiesen, nach dem Zweikomponenten-Verfahren zu arbeiten und die Verbindungen mit mindestens zwei mit Isocyanatgruppen reaktiven Wasserstoffatomen zusammen mit den Treibmitteln, den Katalysatoren sowie den Hilfs- und/oder Zusatzstoffen zu einer sogenannten Polyolkomponente zu vereinigen und diese mit den Polyisocyanaten oder Mischungen aus den Polyisocyanaten und gegebenenfalls Treibmitteln, auch als Isocyanatkomponente bezeichnet, zur Umsetzung zu bringen.

Die Ausgangskomponenten werden bei einer Temperatur von 15 bis 90°C, vorzugsweise von 20 bis 35°C gemischt und in ein offenes, gegebenenfalls temperiertes Formwerkzeug eingebracht, in der man die Reaktionsmischung zur Vermeidung einer verdichteten Randzone im wesentlichen druckfrei aufschäumen lässt. Zur Bildung von Verbundelementen beschichtet man zweckmäßigerweise die Rückseite einer Deckschicht, z.B. durch Begießen oder Besprühen, mit der schaumfähigen Reaktionsmischung und lässt diese aufschäumen und zum Hartschaumstoff aushärten. Zum Ausschäumen von Hohlräumen wird die Reaktionsmischung in den Hohlraum eingebracht, wo er unter Ausfüllung des gesamten Hohlraumes aufschäumt, typische Überfüllungsgrade der Cavitäten liegen zwischen 5 % und 25 %.

Die nach dem erfindungsgemäßen Verfahren hergestellten Polyurethan-Hartschaumstoffe werden vorzugsweise als Dämmstoffe eingesetzt. Insbesondere erfolgt ihr Einsatz zur Isolierung von Kühlgeräten oder zur Herstellung von Sandwichelementen, die vorzugsweise nach der Doppelband-Technologie hergestellt werden können. Dabei können Deckschichten aus Metall oder Kunststoff verwendet werden. Die Dichte der nach dem erfindungsgemäßen Verfahren hergestellten Schaumstoffe liegt vorzugsweise im Bereich zwischen 25 und 45 g/l.

Die Erfindung soll an den nachfolgenden Beispielen näher beschrieben werden.

### Methoden:

Die Viskosität der Polyole und Isocyanate bei 25°C wurde mit einem Rotationsviskosimeter Rheotec RC 20 unter Verwendung der Spindel CC 25 DIN (Spindel-Durchmesser: 12.5 mm; Messzylinder-Innendurchmesser: 13.56 mm) bei einer Scherrate von 50 1/s bestimmt.

Die Wärmeleitfähigkeit wurde bestimmt nach DIN 52616. Zur Herstellung der Prüfkörper wurde das Polyurethan-Reaktionsgemisch in eine Form der Maße 200 X 20 X 5 cm gegossen (10 % Überfüllung) und nach einigen Stunden ein Prüfkörper der Dimension 20X20X2 cm aus der Mitte geschnitten.
Die Druckfestigkeit wurde bestimmt nach DIN 53421 / DIN EN ISO 604
Der Anteil an geschlossenen Zellen wurde bestimmt nach ISO 4590.

### Beispiele 1 bis 15 und Vergleichsbeispiele 1 bis 5

### (Beispiele 1 bis 12 sowie Beispiel 13 gemäß Tabelle 2 sind als Vergleichsbeispiele gekennzeichnet)

Die in Tabelle 1 bis 3 angegebenen Polyole, Katalysatoren, Treibmittel und Zusatzstoffe wurden durch Rühren bei Raumtemperatur zu einer Polyolkomponente vereinigt. Diese wurde diese wurden mit der angegebenen Isocyanatkomponente (Tabelle 1 und 2: Isocyanat 1, Tabelle 3: siehe Tabelle 3) bei der angegebenen Kennzahl mit einem Hochdruckpuromaten verschäumt. Die Verarbeitungsparameter und die mechanischen Eigenschaften der resultierenden Schaumstoffe sind ebenfalls aus den Tabellen 1 bis 3 zu entnehmen.

**Tabelle 1**

| | Vergleichsbsp. 1 | Vergleichsbsp. 2 | Vergleichsbsp. 3 | Vergleichsbsp. 4 | Vergleichsbsp.5 | Bsp. 1 * | Bsp. 2 * | Bsp. 3 * | Bsp. 4 * | Bsp. 5* |
|---|---|---|---|---|---|---|---|---|---|---|
| Polyol A | 20 | | 20 | 20 | 20 | 20 | 20 | 20 | 20 | 20 |
| Polyol B | | 56,6 | | | | 56,6 | 56,6 | | | |
| Polyol C | 18 | 18 | 18 | 18 | 18 | 18 | | | | |
| Polyol D | | | | | | | 18 | 18 | 18 | 18 |
| Polyol E | 56,6 | | | | | | | | | |
| Polyol F | | 20 | | | | | | | | |
| Polyol G | | | 56,6 | | | | | | | |
| Polyol H | | | | 56,6 | | | | | | |
| Polyol I | | | | | 56,6 | | | | | |
| Polyol J | | | | | | | | 56,6 | | |
| Polyol K | | | | | | | | | 56,6 | |
| Polyol L | | | | | | | | | | 56,6 |
| Stabilisator | 2 | 2 | 2 | 2 | 2 | 2 | 2 | 2 | 2 | 2 |
| Wasser | 2,3 | 2,3 | 2,3 | 2,3 | 2,3 | 2,3 | 2,3 | 2,3 | 2,3 | 2,3 |
| Katalysator | 1,8 | 1,2 | 1,2 | 0,9 | 0,9 | 0,9 | 2,5 | 2,0 | 2,2 | 0,6 |
| Cyclopentan | 9,8 | 9,8 | 9,8 | 9,8 | 9,8 | 9,8 | 9,8 | 9,8 | 9,8 | 9,8 |
| Isopentan | 4,2 | 4,2 | 4,2 | 4,2 | 4,2 | 4,2 | 4,2 | 4,2 | 4,2 | 4,2 |
| Polyol Viskosität [mPas], 20°C, ohne Treibmittel | 7000 | 6200 | 5500 | 17000 | 17000 | 5500 | 10000 | 10000 | 13000 | 7000 |
| Mischungsverhältnis 100: | 131 | 125 | 131 | 142 | 106 | 126 | 124 | 118 | 118 | 120 |
| Kennzahl | 117 | 117 | 117 | 117 | 117 | 117 | 117 | 117 | 117 | 117 |
| Abindezeit [s] | 40 | 42 | 37 | 44 | 40 | 39 | 37 | 42 | 40 | 39 |
| Freigeschäumte Rohdichte [g/l] | 24,1 | 23,4 | 24,0 | 23,6 | 23,8 | 24,4 | 24,3 | 24,4 | 24,4 | 24,2 |

| | Vergleichsbsp. 1 | Vergleichsbsp. 2 | Vergleichsbsp. 3 | Vergleichsbsp. 4 | Vergleichsbsp.5 | Bsp. 1 * | Bsp. 2 * | Bsp. 3 * | Bsp. 4 * | Bsp. 5 * |
|---|---|---|---|---|---|---|---|---|---|---|
| Minimale Fülldichte [g/l] | 31,6 | 30,6 | 31,5 | 31,9 | 31,7 | 31,9 | 32,1 | 32,3 | 32,5 | 32,2 |
| Fließfaktor (min. Fülldichte / freie Rohdichte) | 1,31 | 1,31 | 1,31 | 1,35 | 1,33 | 1,31 | 1,32 | 1,32 | 1,33 | 1,33 |
| Offenzelligkeit [%] | 5 | 6 | 4 | 7 | 5 | 6 | 7 | 5 | 4 | 6 |
| Wärmeleitfähigkeit [mW/mK] | 19,5 | 20,3 | 19,6 | 20,2 | 20,5 | 19,7 | 19,6 | 19,8 | 19,7 | 19,9 |
| Druckfestigkeit (RD 31) 20% OP, [N/mm²] | 16,5 | 16,1 | 16,3 | 16,7 | 15,9 | 16,2 | 16,0 | 15,8 | 15,9 | 16,1 |
| Nachtrieb nach 24 h, 3 Min. 20% Overpack [mm] | 95,3 | 96,1 | 96,1 | 97,8 | 97,3 | 94,5 | 94,8 | 94,2 | 94 | 94,3 |

| | | | | | | | | | | |
|---|---|---|---|---|---|---|---|---|---|---|
| * Vergleichsbeispiel | | | | | | | | | | |

**Tabelle 2**

| | Vergleich s-bsp. 1 | Bsp. * 6 | Bsp.* 7 | Bsp. * 8 | Bsp. * 9 | Bsp. * 10 | Bsp. * 11 | Bsp. * 12 | Bsp. * 13 |
|---|---|---|---|---|---|---|---|---|---|
| Polyol A | 20 | 20 | 20 | 20 | 20 | 20 | 20 | | |
| Polyol B | | 56,6 | 56,6 | 56,6 | 56,6 | 56,6 | 56,6 | 56,6 | 56,6 |
| Polyol C | 18 | 18 | 18 | | | | | | 18 |
| Polyol E | 56,6 | | | | | | | | |
| Polyol M | | | | 18 | | | | 18 | |
| Polyol N | | | | | 18 | | | | |
| Polyol O | | | | | | 18 | | | |
| Polyol P | | | | | | | 18 | | |
| Polyol Q | | | | | | | | 20 | 20 |
| Stabilisator | 2 | 2 | 2 | 2 | 2 | 2 | 2 | 2 | 2 |
| Wasser | 2,3 | 2,3 | 2,3 | 2,3 | 2,3 | 2,3 | 2,3 | 2,3 | 2,3 |
| Katalysator | 1,8 | 0,9 | 0,9 | 2,5 | 2,2 | 0,6 | 0,6 | 0,6 | 2,0 |
| Cyclopentan | 9,8 | | 12 | 9,8 | 9,8 | 9,8 | 9,8 | 9,8 | 9,8 |
| Isopentan | 4,2 | | | 4,2 | 4,2 | 4,2 | 4,2 | 4,2 | 4,2 |
| Isobutan | | | 2 | | | | | | |
| 245fa | | 35 | | | | | | | |
| Polyol Viskosität [mPas], 20°C, ohne Treibmittel | 7000 | 5500 | 5500 | 4000 | 5000 | 5000 | 5000 | 5000 | 4500 |
| Mischungsverhältnis 100: | 131 | 106 | 126 | 122 | 124 | 126 | 126 | 122 | 123 |
| Kennzahl | 117 | 117 | 117 | 117 | 117 | 117 | 117 | 117 | 117 |
| Abbindezeit [s] | 40 | 38 | 41 | 37 | 40 | 38 | 38 | 38 | 42 |
| Freigeschäumte Rohdichte [g/l] | 24,1 | 22,5 | 23,0 | 23,5 | 23,3 | 23,0 | 23,3 | 23,2 | 23,4 |
| Minimale Fülldichte [g/l] | 31,6 | 28,8 | 31,0 | 30,5 | 30,8 | 30,4 | 30,0 | 30,1 | 30,6 |
| Fließfaktor (min. Fülldichte / freie Rohdichte) | 1,31 | 1,3 | 1,35 | 1,30 | 1,32 | 1,32 | 1,29 | 1,30 | 1,31 |
| Offenzelligkeit [%] | 5 | 5 | 4 | 6 | 4 | 6 | 5 | 6 | 5 |
| Wärmeleitfähigkeit [mW/mK] | 19,5 | 17,9 | 19,8 | 19,6 | 19,7 | 19,7 | 19,5 | 19,6 | 19,8 |
| Druckfestigkeit (RD 31) 20% OP, [N/mm²] | 16,5 | 15,4 | 16,5 | 16,3 | 16,4 | 16,6 | 16,2 | 16,5 | 16,2 |
| Nachtrieb nach 24h, 3 Min. 20% Overpack [mm] | 95,3 | 94,6 | 94,5 | 94,3 | 94,5 | 94,5 | 94,7 | 94,7 | 94,8 |

| | | | | | | | | | |
|---|---|---|---|---|---|---|---|---|---|
| * Vergleichsbeispiel | | | | | | | | | |

**Tabelle 3**

| | Vergleichsbsp. 1 | Bsp. 12 * | Bsp.13 | Bsp. 14 | Bsp. 15 |
|---|---|---|---|---|---|
| Polyol A | 20 | 20 | 20 | 20 | 20 |
| Polyol B | | 56,6 | 56,6 | 56,6 | 56,6 |
| Polyol C | 18 | 18 | 18 | 18 | 18 |

| | Vergleichsbsp. 1 | Bsp. 12 * | Bsp. 13 | Bsp. 14 | Bsp. 15 |
|---|---|---|---|---|---|
| Polyol E | 56,6 | | | | |
| Stabilisator | 2 | 2 | 2 | 2 | 2 |
| Wasser | 2,3 | 2,3 | 2,3 | 2,3 | 2,3 |
| Katalysator | 1,8 | 0,9 | 1,2 | 1,2 | 0,9 |
| Cyclopentan | 9,8 | 9,8 | 9,8 | 9,8 | 9,8 |
| Isopentan | 4,2 | 4,2 | 4,2 | 4,2 | 4,2 |
| Isocyanat 3 | | | 27 | 64 | 80 |
| Isocyanat 1 | 131 | 126 | | | |
| Isocyanat 2 | | | 102 | 64 | 47 |
| Polyol Viskosität [mPas], 20°C, ohne Treibmittel | 7000 | 5500 | 5500 | 5500 | 5500 |
| Mischungsverhältnis 100: | 131 | 126 | 129 | 128 | 127 |
| Kennzahl | 117 | 117 | 117 | 117 | 117 |
| Abbindezeit [s] | 40 | 38 | 42 | 40 | 41 |
| Freigeschäumte Rohdichte [g/l] | 24,1 | 24,4 | 23,4 | 24,0 | 23,6 |
| Minimale Fülldichte [g/l] | 31,6 | 31,9 | 30,6 | 31,5 | 31,9 |
| Fließfaktor (min. Fülldichte / freie Rohdichte) | 1,31 | 1,31 | 1,39 | 1,37 | 1,34 |
| Offenzelligkeit [%] | 5 | 6 | 6 | 4 | 7 |
| Wärmeleitfähigkeit [mW/mK] | 19,5 | 19,7 | 20,3 | 19,1 | 19,2 |
| Druckfestigkeit (RD 31) 20% OP, [N/mm²] | 16,5 | 16,2 | 16,1 | 16,3 | 16,7 |
| Nachtrieb nach 24h, 3 Min. 20% Overpack [mm] | 95,3 | 94,5 | 93,3 | 93,6 | 93,9 |

| | | | | | |
|---|---|---|---|---|---|
| * Vergleichsbeispiel | | | | | |

### Eingesetzte Rohstoffe:

Polyol A: Polyetheralkohol aus vicinalem TDA, Ethylenoxid und Propylenoxid, Gehalt an Ethylenoxid: 15 %, Funktionalität 3.8, Hydroxylzahl 400, Viskosität 17000 mPas bei 25°C
Polyol B: Polyetheralkohol aus Saccharose, Glycerin und Propylenoxid, Funktionalität 5,1, Hydroxylzahl 450, Viskosität 20000 mPas bei 25°C
Polyol C: Polyetheralkohol aus Trimethylolpropan und Propylenoxid, Funktionalität 3, Hydroxylzahl 160, Viskosität 300 mPa·s bei 25°C
Polyol D: Polyetheralkohol aus vicinalem TDA, Ethylenoxid und Propylenoxid, Funktionalität 4, Hydroxylzahl 200, Viskosität 300 mPa·s bei 25°C
Polyol E: Polyetheralkohol aus Sorbitol und Propylenoxid, Funktionalität 5, Hydroxylzahl 490, Viskosität 20000 mPa·s bei 25°C
Polyol F: Polyetheralkohol aus vicinalem TDA, Ethylenoxid und Propylenoxid, Gehalt an Ethylenoxid: 22 %, Funktionalität 3,8, Hydroxylzahl 400, Viskosität 9000 mPa·s bei 25°C
Polyol G: Polyetheralkohol aus Saccharose, Glycerin und Propylenoxid, Funktionalität 4,4, Hydroxylzahl 490, Viskosität 8000 mPa·s bei 25°C
Polyol H: Polyetheralkohol aus Saccharose, Propylenglykol und Propylenoxid, Funktionalität 6,5, Hydroxylzahl 570, Viskosität 145000 mPa·s bei 25°C
Polyol I: Polyetheralkohol aus Saccharose und Propylenoxid, Funktionalität 7,5, Hydroxylzahl 310, Viskosität 2000 mPa·s bei 25°C
Polyol J: Polyetheralkohol aus Saccharose, Glycerin und Propylenoxid, Funktionalität 6, Hydroxylzahl 460, Viskosität 40000 mPa·s bei 25°C
Polyol K: Polyetheralkohol aus Saccharose, Glycerin und Propylenoxid, Funktionalität 7, Hydroxylzahl 400, Viskosität 25000 mPa·s bei 25°C,
Polyol L: Polyetheralkohol aus Saccharose, Glycerin und Propylenoxid, Funktionalität 5,8, Hydroxylzahl 400, Viskosität 12000 mPa·s bei 25°
Polyol M: Polyetheralkohol aus Triethanolamin und Propylenoxid, Funktionalität 3, Hydroxylzahl 140, Viskosität 100 mPa·s bei 25°C
Polyol N: Polyetheralkohol aus Ethylendiamin und Propylenoxid, Funktionalität 4, Hydroxylzahl 160, Viskosität 100 mPa·s bei 25°C
Polyol O: Polyetheralkohol aus Anilin und Propylenoxid, Funktionalität 2, Hydroxylzahl 160, Viskosität 300 mPa·s bei 25°C
Polyol P: Polyetheralkohol aus Glycerin und Propylenoxid, Funktionalität 3, Hydroxylzahl 160, Viskosität 200 mPa·s bei 25°C
Polyol Q: Polyetheralkohol aus vicinalem TDA, Ethylenoxid und Propylenoxid, Funktionalität 3.8, Hydroxylzahl 380, Viskosität 10000 mPa·s bei 25°C
Isocyanat 1: PMDI, Viskosität 200 mPa·s [25°C], NCO-Gehalt 31 Gew.-%,
Isocyanat 2: PMDI, Viskosität 2000 mPa·s [25°C], NCO-Gehalt 31 Gew.-%,
Isocyanat 3: PMDI, Viskosität 100 mPa·s [25°C], NCO-Gehalt 31 Gew.-%,
Stabilisator: Tegostab^{®} B 8462, Degussa AG
Katalysator: Gemisch aus 1.4 TI. Dimethylcyclohexylamin, 0.5 TI. Pentamethyldiethylentriamin, 0.4 TI. N600, BASF AG
Wie ersichtlich, haben die nach dem erfindungsgemäßen Beispiel hergestellten Schaumstoffe eine bessere Entformbarkeit, erkennbar an den geringeren Werten für den Nachtrieb nach 24 Stunden.

## Patentansprüche

1. Verfahren zur Herstellung von Polyurethan-Hartschaumstoffen durch Umsetzung von
a) Polyisocyanaten mit
b) Verbindungen mit mindestens zwei mit Isocyanatgruppen reaktiven Wasserstoffatomen in Anwesenheit von
c) Treibmitteln,
**dadurch gekennzeichnet, dass** als Verbindungen mit mindestens zwei mit Isocyanatgruppen reaktiven Wasserstoffatomen b) ein Gemisch aus
b1) einem Polyetheralkohol mit einer Hydroxylzahl von 360 bis 450 mg KOH/g und einer Viskosität bei 25°C von größer 12000 mPa·s, herstellbar durch Anlagerung von Ethylenoxid und/oder Propylenoxid an TDA,
b2) einem Polyetheralkohol mit einer Funktionalität von 5 bis 7,5 und einer Hydroxylzahl von 380 bis 480 mg KOH/g, herstellbar durch Anlagerung von Propylenoxid an Sorbit und/oder Saccharose,
b3) einem Polyetheralkohol mit einer Funktionalität von 2 bis 4 und einer Hydroxylzahl von 140 bis 250 mg KOH/g, herstellbar durch Anlagerung von Ethylenoxid und Propylenoxid an TDA, von TDA verschiedene Amine oder von Propylenoxid an 2-, 3- oder 4-funktionelle Alkohole, oder Ricinusölderivate,
eingesetzt wird, und
wobei als Polyisocyanat eine Mischung aus einer Komponente a1) mit einem NCO-Gehalt von 30 bis 32 Gew.-% und einer Viskosität von 2000 bis 2200 mPa·s bei 25°C und einer Komponente a2) mit einem NCO-Gehalt von 30 bis 32 Gew.-% und einer Viskosität von 100 bis 120 mPa·s bei 25°C eingesetzt wird.

2. Verfahren nach Anspruch 1, **dadurch gekennzeichnet, dass** Polyol b1) durch Anlagerung von Ethylenoxid und Propylenoxid an TDA mit einem Gehalt von mindestens 70 Gew.-% vicinalem TDA hergestellt wird.

3. Verfahren nach Anspruch 1, **dadurch gekennzeichnet, dass** Polyol b1) einen Gehalt von Ethylenoxideinheiten von maximal 25 Gew.-%, bezogen auf das Gewicht des Polyetheralkohols, aufweist.

4. Verfahren nach Anspruch 1, **dadurch gekennzeichnet, dass** Polyol b2) einen Gehalt an freier Saccharose von kleiner 0,05 Gew.-% aufweist.

5. Verfahren nach Anspruch 1, **dadurch gekennzeichnet, dass** die Mischung der Polyole b1), b2) und b3) einen Gehalt an freier Saccharose von kleiner 0,03 Gew.-% aufweist.

6. Verfahren nach Anspruch 1, **dadurch gekennzeichnet, dass** die Polyole b1) in einer Menge von 10 bis 50 Gew.-%, die Polyole b2) in einer Menge von 25 bis 80 Gew.-% und die Polyole b3) in einer Menge von 10 bis 25 Gew.-%, jeweils bezogen auf die Summe der Polyole b1), b2) und b3), eingesetzt werden.

7. Verfahren nach Anspruch 1, **dadurch gekennzeichnet, dass** die Komponente a1) einen Anteil an 2-Kern MDI von 22 bis 28 Gew.-%, einen Anteil an 3-Kern MDI von 26 bis 34 Gew.-% und einen Anteil an 4-Kern MDI von 5 bis 11 Gew.-%, jeweils bezogen auf das Gewicht des Polyisocyanats a), aufweist.

8. Verfahren nach Anspruch 1, **dadurch gekennzeichnet, dass** die Komponente a2) einen Anteil an 2-Kern MDI von 43 bis 53 Gew.-%, einen Anteil an 3-Kern MDI von 20 bis 26 Gew.-% und einen Anteil an 4-Kern MDI von 5 bis 9 Gew.-% aufweist.

9. Verfahren nach Anspruch 1, **dadurch gekennzeichnet, dass** die Mischung aus a1) und a2) einen Anteil an 2-Kern MDI von 25 bis 38 Gew.-% und eine Viskosität von 250 bis 1000 mPa·s bei 25°C aufweist.

10. Polyurethan-Hartschaumstoffe, herstellbar nach einem der Ansprüche 1 bis 9.

11. Polyurethan-Hartschaumstoffe nach Anspruch 10, **dadurch gekennzeichnet, dass** sie eine Rohdichte im Bereich zwischen 25 und 45 g/l aufweisen.

12. Verwendung von Polyurethan-Hartschaumstoffen nach Anspruch 10 zur Herstellung von Kühlgeräten.

13. Kühlgeräte, hergestellt mit Polyurethan-Hartschaumstoffen nach Anspruch 10.

## Claims

1. A process for producing rigid polyurethane foams by reacting
a) polyisocyanates with
b) compounds having at least two hydrogen atoms which are reactive toward isocyanate groups in the presence of
c) blowing agents,
wherein a mixture of
b1) a polyether alcohol which has a hydroxyl number of from 360 to 450 mg KOH/g and a viscosity at 25°C of greater than 12 000 mPa·s and can be prepared by addition of ethylene oxide and/or propylene oxide onto TDA,
b2) a polyether alcohol which has a functionality of from 5 to 7.5 and a hydroxyl number of from 380 to 480 mg KOH/g and can be prepared by addition of propylene oxide onto sorbitol and/or sucrose,
b3) a polyether alcohol which has a functionality of from 2 to 4 and a hydroxyl number of from 140 to 250 mg KOH/g and can be prepared by addition of ethylene oxide and propylene oxide onto TDA or amines other than TDA or of propylene oxide onto 2-, 3- or 4-functional alcohols or castor oil derivatives,
is used as compounds b) having at least two hydrogen atoms which are reactive toward isocyanate groups, and
wherein a mixture of a component a1) having an NCO content of from 30 to 32% by weight and a viscosity of from 2000 to 2200 mPa·s at 25°C and a component a2) having an NCO content of from 30 to 32% by weight and a viscosity of from 100 to 120 mPa·s at 25°C is used as polyisocyanate.

2. The process according to claim 1, wherein polyol b1) is prepared by addition of ethylene oxide and propylene oxide onto TDA having a content of at least 70% by weight of vicinal TDA.

3. The process according to claim 1, wherein polyol b1) has a content of ethylene oxide units of not more than 25% by weight, based on the weight of the polyether alcohol.

4. The process according to claim 1, wherein polyol b2) has a content of free sucrose of less than 0.05% by weight.

5. The process according to claim 1, wherein the mixture of the polyols b1), b2) and b3) has a content of free sucrose of less than 0.03% by weight.

6. The process according to claim 1, wherein the polyols b1) are used in an amount of from 10 to 50% by weight, the polyols b2) are used in an amount of from 25 to 80% by weight and the polyols b3) are used in an amount of from 10 to 25% by weight, in each case based on the sum of the polyols b1), b2) and b3).

7. The process according to claim 1, wherein the component a1) has a proportion of 2-ring MDI of from 22 to 28% by weight, a proportion of 3-ring MDI of from 26 to 34% by weight and a proportion of 4-ring MDI of from 5 to 11% by weight, in each case based on the weight of the polyisocyanate a).

8. The process according to claim 1, wherein the component a2) has a proportion of 2-ring MDI of from 43 to 53% by weight, a proportion of 3-ring MDI of from 20 to 26% by weight and a proportion of 4-ring MDI of from 5 to 9% by weight.

9. The process according to claim 1, wherein the mixture of a1) and a2) has a proportion of 2-ring MDI of from 25 to 38% by weight and a viscosity of from 250 to 1000 mPa·s at 25°C.

10. A rigid polyurethane foam which can be produced according to any of claims 1 to 9.

11. The rigid polyurethane foam according to claim 10 which has a foam density in the range from 25 to 45 g/l.

12. The use of a rigid polyurethane foam according to claim 10 for producing refrigeration appliances.

13. A refrigeration appliance produced using a rigid polyurethane foam according to claim 10.

## Revendications

1. Procédé de préparation de mousses dures de polyuréthane par mise en réaction
a) de polyisocyanates avec
b) des composés comprenant au moins deux atomes d'hydrogène réactifs avec les groupes isocyanate, en présence
c) d'agents gonflants,
**caractérisé en ce qu'**en tant que composés contenant au moins deux atomes d'hydrogène réactifs avec les groupes isocyanate b), un mélange
b1) d'un polyéther-alcool ayant un indice hydroxyle de 360 à 450 mg de KOH/g et une viscosité à 25 °C supérieure à 12 000 mPa·s, pouvant être préparé par addition d'oxyde d'éthylène et/ou d'oxyde de propylène sur de la TDA,
b2) d'un polyéther-alcool ayant une fonctionnalité de 5 à 7,5 et un indice hydroxyle de 380 à 480 mg de KOH/g, pouvant être préparé par addition d'oxyde de propylène sur du sorbitol et/ou du saccharose,
b3) d'un polyéther-alcool ayant une fonctionnalité de 2 à 4 et un indice hydroxyle de 140 à 250 mg KOH/g, pouvant être préparé par addition d'oxyde d'éthylène et d'oxyde de propylène sur de la TDA, d'amines différentes de la TDA, ou d'oxyde de propylène sur des alcools 2-fonctionnels, 3-fonctionnels ou 4-fonctionnels, ou des dérivés d'huile de ricin,
est utilisé, et
en tant que polyisocyanate, un mélange d'un composant a1) doté d'une teneur en NCO de 30 à 32 % en poids et d'une viscosité de 2 000 à 2 200 mPa·s à 25 °C et d'un composant a2) doté d'une teneur en NCO de 30 à 32 % en poids et d'une viscosité de 100 à 120 mPa·s à 25 °C, est utilisé.

2. Procédé selon la revendication 1, **caractérisé en ce que** le polyol b1) est préparé par addition d'oxyde d'éthylène et d'oxyde de propylène sur de la TDA ayant une teneur d'au moins 70 % en poids de TDA vicinale.

3. Procédé selon la revendication 1, **caractérisé en ce que** le polyol b1) présente une teneur en unités d'oxyde d'éthylène d'au plus 25 % en poids, par rapport au poids du polyéther-alcool.

4. Procédé selon la revendication 1, **caractérisé en ce que** le polyol b2) présente une teneur en saccharose libre inférieure à 0,05 % en poids.

5. Procédé selon la revendication 1, **caractérisé en ce que** le mélange des polyols b1), b2) et b3) présente une teneur en saccharose libre inférieure à 0,03 % en poids.

6. Procédé selon la revendication 1, **caractérisé en ce que** les polyols b1) sont utilisés en une quantité de 10 à 50 % en poids, les polyols b2) en une quantité de 25 à 80 % en poids et les polyols b3) en une quantité de 10 à 25 % en poids, à chaque fois par rapport à la somme des polyols b1), b2) et b3).

7. Procédé selon la revendication 1, **caractérisé en ce que** le composant a1) présente une proportion de MDI 2-nucléaire de 22 à 28 % en poids, une proportion de MDI 3-nucléaire de 26 à 34 % en poids et une proportion de MDI 4-nucléaire de 5 à 11 % en poids, à chaque fois par rapport au poids du polyisocyanate a).

8. Procédé selon la revendication 1, **caractérisé en ce que** le composant a2) présente une proportion de MDI 2-nucléaire de 43 à 53 % en poids, une proportion de MDI 3-nucléaire de 20 à 26 % en poids et une proportion de MDI 4-nucléaire de 5 à 9 % en poids.

9. Procédé selon la revendication 1, **caractérisé en ce que** le mélange de a1) et a2) présente une proportion de MDI 2-nucléaire de 25 à 38 % en poids et une viscosité de 250 à 1 000 mPa·s à 25 °C.

10. Mousses dures de polyuréthane, pouvant être préparées selon l'une quelconque des revendications 1 à 9.

11. Mousses dures de polyuréthane selon la revendication 10, **caractérisées en ce qu'**elles présentent une densité apparente dans la plage comprise entre 25 et 45 g/l.

12. Utilisation de mousses dures de polyuréthane selon la revendication 10 pour la fabrication d'appareils réfrigérants.

13. Appareils réfrigérants, fabriqués avec des mousses dures de polyuréthane selon la revendication 10.
